# EUROPEAN PATENT APPLICATION

(11) **EP 3 141 143 A2**
(43) Date of publication of application: **15.03.2017**
(21) Application number: 16187887.1
(22) Date of filing: 08.09.2016
(51) Int. Cl.: A45C 11/00, G09B 21/00

(54) **DISPLAY AND HOUSING APPARATUS FOR IMAGE DISPLAY DEVICE**

(30) Priority: 08.09.2015 US 201514847376
(71) Applicant: Optelec Holding B.V., 2993 LT Barendrecht (NL)
(72) Inventor: van Hees, Lukas Wilhelmus, 2275 BX Voorburg (NL)
(74) Representative: Nederlandsch Octrooibureau

(57) **Abstract**

An apparatus for protecting and supporting an image displaying device (12) with a screen includes a rigid housing (16) able to at least partially cover the screen of the displaying device; and display support means to connect the image displaying device to the apparatus such that the image displaying device is supported by the apparatus in a displaying position.

## Description

### BACKGROUND

This invention relates to an apparatus which can support and protect an image displaying device. Image displaying devices can be used for a variety of everyday tasks, for example reading, looking at photographs and checking email.

Some specialized image displaying devices are designed to assist persons with impaired eyesight, low vision or other difficulties in reading or viewing an object, and such devices can also include accessories specifically directed for these devices as well. A specialized image displaying device for assisting persons with impaired eyesight, low vision or other reading difficulties can employ magnification and/or image enhancement. This can be done through a machine which employs a camera for capturing the object and a screen for displaying an electronic representation of the object. The electronic representation can show the image magnified, with better contrast, different colors, inverted text and/or different brightness.

Such a type of device which can be used for assisting in magnification and/or image enhancement can be found in U.S. App. No. 14/144,748 entitled VIEWING DEVICE, filed on December 31, 2013, which is hereby incorporated by reference. The device is able to support an image displaying device, and can move with respect to the object and/or the surface on which it sits, and the object is displayed on the screen.

### SUMMARY

An apparatus for protecting and supporting an image displaying device with a screen includes a rigid housing able to at least partially cover the screen of the displaying device; and display support means to connect the image displaying device to the apparatus such that the image displaying device is supported by the apparatus in a displaying position.

Such an apparatus allows for the securing of the image displaying device in both a displaying position and in a storage position with one compact housing. The display support means allows the apparatus to be able to stably support the display in a display position, and the ability to at least partially cover the screen with the rigid housing allows for protection of the display when not in use.
According to an embodiment, the housing comprises a sleeve with an opening for receiving the displaying device when not in use. Optionally, the housing further comprises a front panel; a back panel; and three sides connecting the front and back panel to form the sleeve, with the opening being located on the fourth side not connecting the front panel and the back panel. The opening can be located on either a length side or an end side.

According to an embodiment, the display support means comprises a slot in the back panel arranged for receiving at least a portion of the displaying device in the slot. Optionally, the slot is angled to support the display device in an angled position. Such a slot can allow for simple sliding movement of the image displaying device to be placed into a secure and stable displaying position. Angling the slot can provide for easily positioning the image displaying device to be able to capture and display an image of something located on the surface on which it sits.

According to an embodiment, the housing comprises an outer side with one or more features to enable sliding movement over a surface. Optionally, the one or more sliding features can be one or more of the following: projections, skis, rounded edges and/or materials or coatings which enable sliding movement.

According to an embodiment, the display support means comprises a slot in the housing for receiving at least a portion of the displaying device in the housing. Optionally, the slot can be angled.

According to an embodiment, the housing comprises a clip and the display support means comprises a slot opening in the clip for receiving the image displaying device in a displaying position. Optionally, the clip is open on both ends. Further optionally, the clip comprises a feature for holding the image displaying device at a desired angle. Such a clip can allow for stable and secure positioning of the image displaying device in either a displaying position or a storage position with a compact housing. The clip can be formed on one integral piece, making manufacture easier.

According to an embodiment, the apparatus further comprises securing means for securing the apparatus and the displaying device when in a closed position with the housing covering the screen and/or when the displaying device is being supported by the displaying support means of the apparatus in a displaying position. Optionally, the securing means comprises one or more of: a locking feature, a snap feature, a hinge feature and a magnetic connection feature. Such securing means can further ensure that the image displaying device is secured and stable in the desired position.

According to an embodiment, the housing comprises a tray with a front panel and four side extending from the edges of the front panel; and wherein the display support means comprises a hinge connection between the displaying device and the housing which allows the displaying device to rotate from a closed position sitting in the housing with the screen covered by the front panel to a display position. Optionally, the display position secures the displaying device at an angle with respect to the housing such that an optical sensor of the displaying device can capture an object on a surface on which the apparatus rests. Such an embodiment can allow for a simple connection between the image displaying device and the apparatus, allowing for simple rotation movement between the use and the storage position.

According to a second aspect of the invention, an apparatus includes a displaying device with a screen for displaying an object and an optical sensor for capturing an image of the object; and a rigid housing arranged to receive the displaying device such that the screen is at least partially covered by the housing when the displaying device is not in use. The housing includes display support means to support the displaying device in a displaying position for capturing the image of the object with the optical sensor and displaying the image on the screen. Such an apparatus provides a single housing which can support the image displaying device in a display position and protect the displaying device in a storage position.

According to an embodiment, the housing comprises a sleeve with an opening for receiving the displaying device when not in use.

According to an embodiment, the display support means comprises a slot in the housing to support the displaying device in a displaying position. Such a slot can be angled to allow proper positioning for capturing and displaying an object.

According to an embodiment, the display support means comprises a hinged connection between the displaying device and the housing. Such a hinged connection can provide for easy rotational movement from a display position to a non-use position and vice versa without image displaying device and apparatus being disconnected.

According to an embodiment, the housing comprises a clip. The clip could allow for easy sliding movement out of either end if both ends are open. Forming the housing as a clip can also simplify manufacture.

According to an embodiment, the apparatus further comprises securing means for securing the display device to the housing when not in use and/or to secure the displaying device to the housing in a displaying position.

According to an embodiment, the housing is supported by a surface; and the display support means supports the displaying device such that the optical sensor is positioned for capturing an image located on the surface which supports the housing.

According to an embodiment, the housing is arranged to receive the displaying device such that the screen is fully covered by the housing when the displaying device is not in use.

According to a further aspect of the invention, a method of forming an apparatus for protecting and supporting an image displaying device with a screen includes forming a rigid housing able to receive the displaying device and protect the screen when not in use; and forming display support means in the housing for supporting the displaying device in a use position.

According to an embodiment, the step of forming display support means in the housing comprises forming a slot in the housing able to receive at least a portion of the displaying device.

### BRIEF DESCRIPTION OF THE DRAWINGS

FIG. 1a shows a perspective front view of an apparatus for protecting and supporting an image displaying device with a screen, with the image displaying device in a displaying position.
Fig. 1b shows a side view of Fig. 1a.
FIG. 1c shows a perspective view of the apparatus and image displaying device of Fig. 1a, with the image displaying device being put in a storage position.
FIG. 1d shows a perspective view of the apparatus and image displaying device of Fig. 1a, with the image displaying device in a storage position.
FIG. 2a shows a perspective view of a second embodiment of an apparatus for protecting and supporting an image displaying device.
FIG. 2b shows a side view of the apparatus of Fig. 2a, with the apparatus supporting an image displaying device in a displaying position.
Fig. 3a shows a perspective view of a third embodiment of an apparatus for protecting and supporting an image displaying device with a screen, with the image displaying device in a displaying position.
Fig. 3b shows a view of the apparatus and image displaying device of Fig. 3a, with the image displaying device not yet secured in a displaying position.
Fig. 3c shows a perspective view of the apparatus and image displaying device of Fig. 3a, with the image displaying device being put into a storage position.
Fig. 4a shows a fourth embodiment of an apparatus for protecting and supporting an image displaying device with a screen, with the image displaying device in a displaying position.
Fig. 4b shows a view of the apparatus and image displaying device of Fig. 4a, with the image displaying device in a storage position.

### DETAILED DESCRIPTION

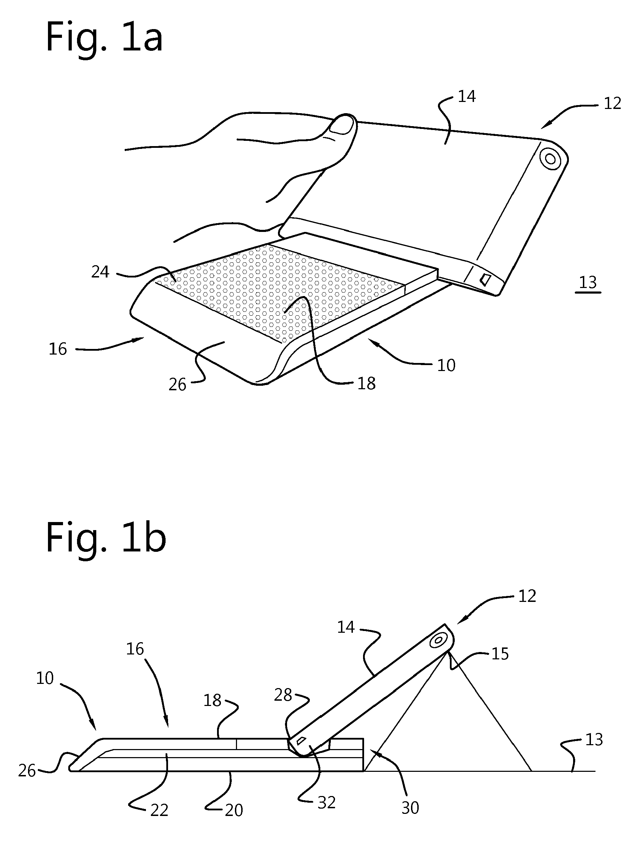

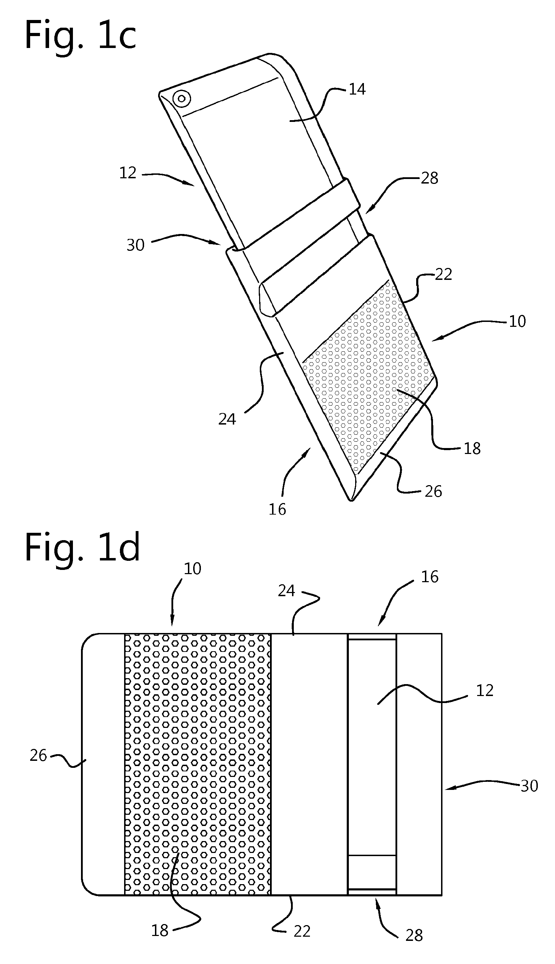

FIG. 1a shows a perspective front view of an apparatus 10 for protecting and supporting an image displaying device 12 with a screen 14, with the image displaying device 12 in a displaying position for displaying an object on surface 13. Fig. 1b shows a side view of Fig. 1a, FIG. 1c shows a perspective view of apparatus 10 and image displaying device 12, with the image displaying device 12 being put in a storage position, and FIG. 1d shows a perspective view of apparatus 10 and image displaying device 12, with image displaying device 12 in a storage position.

Apparatus 10 includes housing 16 with front panel 18, back panel 20, first side 22, second side 24, end 26, slot 28, opening 30, and magnetic strip 32. Apparatus 10 can be formed integrally as one piece or can be formed from separate pieces connected together. Image displaying device 12 includes screen 14 and camera 15.

Housing 16 is a rigid sleeve and can be, for example, a plastic or another rigid material. Front panel 18 and back panel 20 are connected with first and second sides 22, 24 and end 26. Housing 16 is open at opening 30, opposite end 26, though in other embodiments, opening 30 could be in place of one of first and second sides 22, 24 and both ends would be at least partially covered. Housing 16 is shaped such that image displaying device 12 can fit securely within housing 16 when not in use (see Fig. 1d).

Slot 28 is angled and sits in front panel 18, extending at least partially into first side 22 and second side 24. In this embodiment, slot 28 is located near opening 30 and extends in the width direction, though it could be in another direction and/or located at a different place in other embodiments. Slot 28 acts as a display support and securing means, and is able to receive image displaying device 12 when in a displaying position. The placement and angle of slot 28 properly positions image displaying device 12 to capture and display an image on the screen 14 for viewing (see Fig. 1b).

Magnetic strip 32 acts as a securing means, securing image displaying device 12 in a displaying position when image displaying device 12 is secured in slot 28. In other embodiments, securing means could include a particular shape, snap, click-in mechanism, etc. Alternatively or additionally, magnetic strip 32 and/or other securing means could be located on displaying device 12 or on both apparatus 10 and displaying device 12.

As shown in Figs. 1c-1d, image displaying device 12 can be slid into housing 16 through opening 30 for storage and protection of image displaying device 12, and particularly screen 14. Apparatus 10 could also include securing means for when image displaying device 12 is within housing 16 in a storage position. Such securing means can be, for example, magnetic securing means, a particular shape, a snap or click mechanism, a tie or another mechanism to secure image displaying device 12 in a storage and protection position with respect to apparatus 10, as shown in Fig. 1d.

Apparatus 10 can also include one or more sliding features, in this case, rounded edges connecting back panel 20 with sides 22, 24 and end 26. The rounded edges can allow for easier sliding over surface 13 and/or objects to be displayed. Other sliding features could include, for example, projections, skis and/or materials or coatings which enable easier sliding movements. Other optional features can be features to allow for easier gripping and/or handling, such as the rubber projections shown on front panel 18 of housing 16.

Apparatus 10 is able to secure image displaying device 12 in both a storage position and in a viewing position. For displaying, image displaying device 12 is able to slide at least partially into slot 28, and can be supported in a position where camera 15 can capture an object and display it on screen 14. The angle of slot 28 is arranged for proper capturing and screen display, and securing means (magnetic strip 32, shape of apparatus 10 and/or displaying device 12, snap or click mechanism, etc.) can be used to secure displaying device 12 in a proper displaying position. Typically, the object to be displayed is on the surface 13, and camera 15 is positioned to be able to capture the typical position of the object on surface 13. Apparatus 10 can easily slide over the object to display different parts and/or to display a different object while keeping image displaying device 12 in a secured displaying position.

When the user is done using image displaying device 12, apparatus 10 can secure and protect image displaying device 12 at least partially within housing 16, at least partially covering screen 14 for protection. Image displaying device 12 can be slid into apparatus 10 through opening 30 and fits securely within housing 16, with front panel 18, back panel 20, sides 22, 24 and end 26 holding image displaying device 12 in a secure position. Image displaying device 12 can be further secured in apparatus with further securing means, for example, a click in mechanism, magnets, a locking mechanism, a strap and/or tie.

Apparatus 10 is a light-weight and secure device which can be used for both securing and protecting an image displaying device. Housing 16 is able to protect image displaying device 12 and particularly screen 14 by having a rigid design which is able to accommodate image displaying device 12 in a secure manner when not in use. Slot 28 and magnetic strip 32 are able to secure image displaying device 12 in a displaying position. The shape and design of apparatus 10 ensure a solid and secure holding of image displaying device 12 when in either a displaying position or a storage position without the need for a number of complicated parts or additional features. Additionally, the size of apparatus 10 makes it convenient to use when taking image displaying device 12 to various places, allowing for easy use of an image displaying device 12 that is both stable and portable.

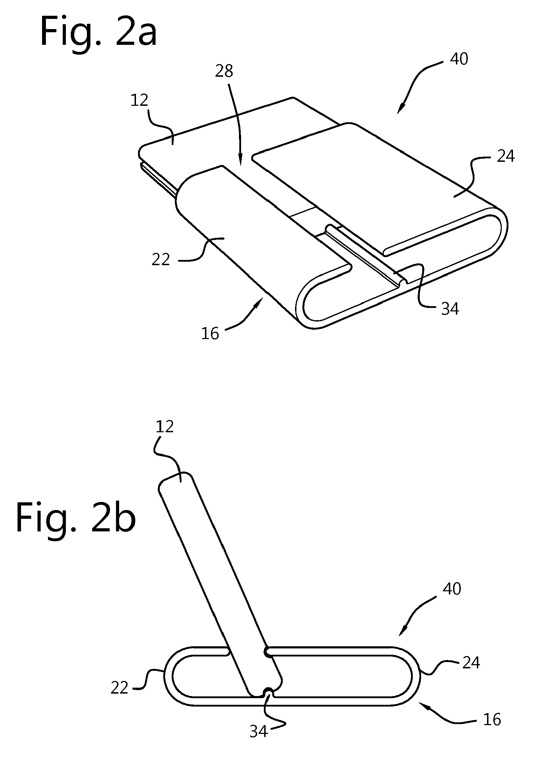

FIG. 2a shows a perspective view of a second embodiment of an apparatus 40 for protecting and supporting an image displaying device 12, and FIG. 2b shows a side view of the apparatus 40, with the apparatus 40 supporting an image displaying device 12 in a displaying position.

Apparatus 40 is a clip in this embodiment, and includes housing 16, sides 22, 24, slot 28 and projection 34. Housing 16 is shaped or formed as a continuous piece with rounded sides 22, 24 and open ends 28, 30. Slot 28 extends along a length direction on one side of housing 16 in this embodiment, though it could be in another location and/or direction in other embodiments.

Projection 34 can be a shape that corresponds to a shape of image displaying device 12, to secure apparatus 40 and image displaying device 12 when in a displaying position (Fig. 2b) and/or when in a storage position. Apparatus 40 and/or image displaying device could also include other securing means alternatively or in addition to projection 34, such as magnets, clips, other shaped projections, ties, etc.

Apparatus 40 and image displaying device 12 work in much of the same manner as described in relation to Figs. 1a-1d. Specifically, apparatus 40 is able to secure image displaying device 12 in a displaying position and in a storage position with a simple and compact design. The rounded edges 22, 24 allow for easy sliding movement of apparatus 40 and image displaying device 12 for viewing. Projection 34 ensures a stable securing of image displaying device 12 in a viewing position. The shape and securing means of apparatus 40 also ensure that when slid within apparatus 40 for a storage position, image displaying device 12 and particularly screen 14 will be protected. Additionally, the clip design can make manufacture simple with the single piece that could be made from injection molding, printing, rolling materials or another method.

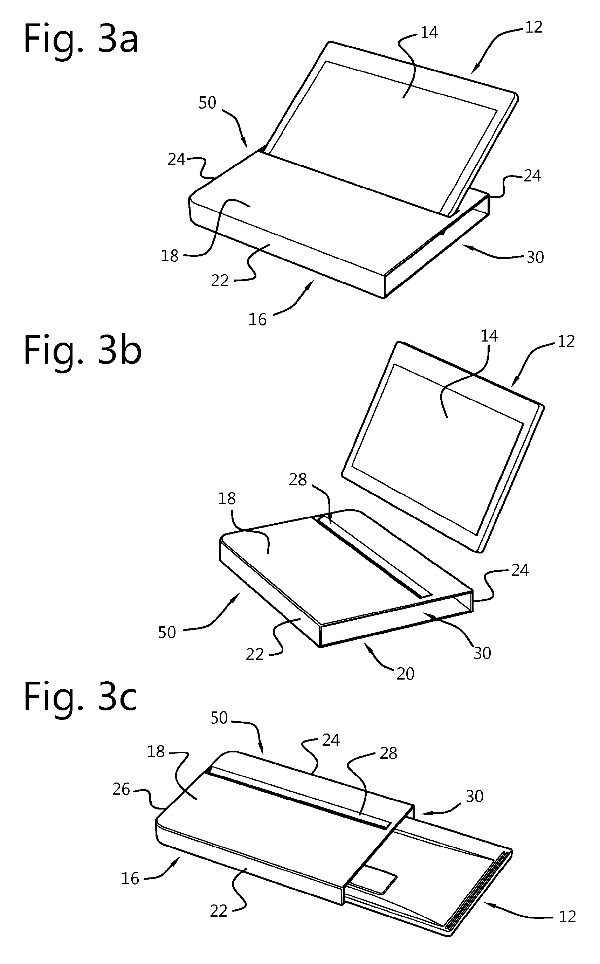

Fig. 3a shows a perspective view of a third embodiment of an apparatus 50 for protecting and supporting image displaying device 12, with image displaying device 12 in a displaying position, and Fig. 3b shows a view of the apparatus 50 and image displaying device 12, with image displaying device 12 being placed in a displaying position. Fig. 3c shows a perspective view of apparatus 50 and image displaying device 12, with image displaying device 12 being put into a storage position.

Apparatus 50 includes housing 16 with front panel 18, back panel 20, first side 22, second side 24, end 26, slot 28 and opening 30. In this embodiment, slot 28 is located in a length direction and only in front panel 18.

Figs. 3b and 3c specifically show the ways image displaying device 12 is secured into slot 28 for a displaying position (Fig. 3b) and into housing 16 for a storage position (Fig. 3c). Apparatus 50 with rigid housing 16 provides a compact and effective base for storage or display and use of image displaying device 12 with simple sliding movements. By arranging housing 16 with slot 28 and opening 30, apparatus is able to easily and simply support image displaying device 12 in a displaying position and to protect image displaying device 12 when not in use. The simple sliding movement to place image displaying device 12 in either the displaying position in slot 28 or in a storage position in opening 30 are easy and intuitive to a user while leading to stable securing and protection for image displaying device 12.

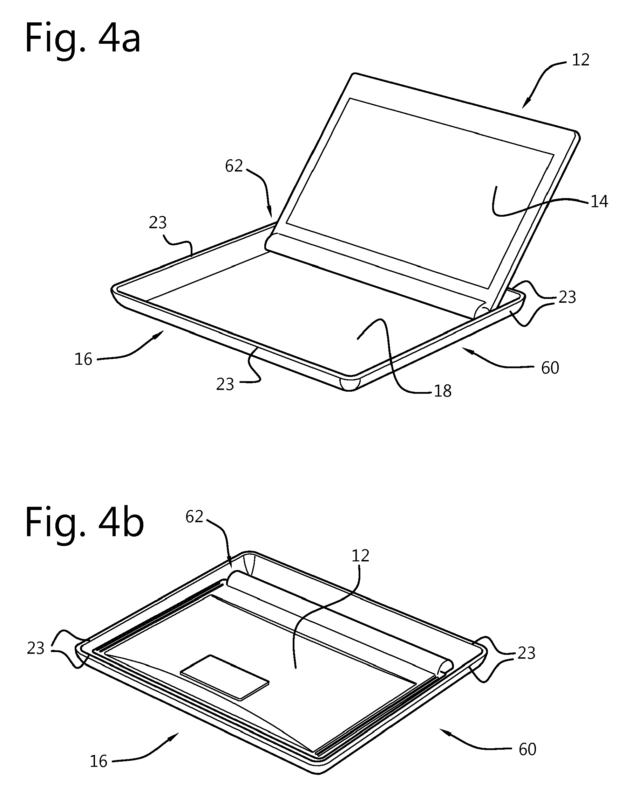

Fig. 4a shows a fourth embodiment of an apparatus 60 for protecting and supporting image displaying device 12, with image displaying device 12 in a displaying position, and Fig. 4b shows a view of the apparatus 60 and image displaying device 12, with image displaying device 12 in a storage position.

Apparatus 60 is tray shaped, and includes housing 16 front panel 18, sides 23 and rotation mechanism 62. Sides 23 extend perpendicular from each side of front panel 18, and rotation mechanism extends in a length direction within housing 16 connecting image displaying device 12 with apparatus 60.

In this embodiment, image displaying device 12 rotates from a displaying position (Fig. 4a) to a closed or storage position (Fig. 4b) with rotation mechanism 62. In the closed position, screen 14 is covered and protected by housing 16. Rotation mechanism 62 can include some sort of locking mechanism to secure image displaying device 12 in a displaying position and/or in a closed position. In some embodiments, image displaying device 12 could be disconnectable from apparatus 60.

Alternative and/or additional securing mechanisms can be used for securing image displaying device 12 in a displaying position (Fig. 4a) and/or in a storage position (Fig. 4b). These could include click or snap mechanisms, magnets, etc.

In summary, apparatus (10, 40, 50, 60) is able to secure an image displaying device 12 in both a proper displaying position and in a storage position for protection when not in use with a simple rigid housing that is able to at least partially cover screen 14 and display support means for securing in the displaying position. The display support means can be a slot, groove, rotation mechanism, or other mechanical securing connection able to support image displaying device 12 such that it can capture and display an image on screen 14 for user. Additionally, apparatus and/or image displaying device 12 can include additional securing means, such as magnets, click or snap mechanisms, complimentary shapes, ties, etc; for further securing in a desired position and/or in a storage position. By using a simple apparatus 10, 40, 50, 60 with a housing 16 that is able to secure image displaying device 12 in both a display position and protect image displaying device 12 in a non-use position; a user need not have a variety of separate stands or cases for positioning an image displaying device and for storing that device. Thus, it can make image displaying device 12 and apparatus 10, 40, 50, 60 easier to transport and use in a variety of situations, including at home, at work and/or in public situations when image display is needed.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. Apparatus (10, 40, 50, 60) for protecting and supporting an image displaying device (12) with a screen (14), said apparatus comprising:
a rigid housing (16) able to at least partially cover the screen of the displaying device; and
display support means to connect the image displaying device (12) to the apparatus (10) such that the image displaying device (12) is supported by the apparatus (10) in a displaying position.

2. The apparatus of claim 1, wherein the housing comprises a sleeve with an opening (30) for receiving the displaying device (12) when not in use.

3. The apparatus of claim 2, wherein the housing further comprises:
a front panel (18);
a back panel (20); and
three sides (22, 24, 26) connecting the front panel and the back panel to form the sleeve, wherein the opening (30) is located on the fourth side not connecting the front panel and the back panel.

4. The apparatus of claim 3, wherein the display support means comprises a slot (28) in the front panel (18) arranged for receiving at least a portion of the displaying device (12) in the slot.

5. The apparatus of claim 4, wherein the slot (28) is angled to support the display device (12) in an angled position.

6. The apparatus of any of the preceding claims, wherein the housing (16) comprises an outer side with one or more features to enable sliding movement over a surface.

7. The apparatus of claim 1, wherein the housing comprises a clip (40) and the display support means comprises a slot opening (28) in the clip for receiving the image displaying device (12) in a displaying position, preferably wherein the clip is open on both ends, more preferably wherein the clip comprises a feature for holding the image displaying device at a desired angle.

8. The apparatus of any of the preceding claims, and further comprising:
securing means for securing the apparatus and the displaying device when in a closed position with the housing covering the screen and/or when the displaying device is being supported by the displaying support means of the apparatus in a displaying position.

9. The apparatus of claim 8, wherein the securing means comprises one or more of: a locking feature, a snap feature, a hinge feature and a magnetic connection feature.

10. The apparatus of any of the preceding claims, wherein the housing comprises a tray (60) with a front panel (18) and four sides (23) extending from the edges of the front panel; and wherein the display support means comprises a hinge connection (62) between the displaying device (12) and the housing (16) which allows the displaying device (12) to rotate from a closed position sitting in the housing with the screen (14) covered by the front panel (18) to a display position, preferably wherein the display position secures the displaying device at an angle with respect to the housing such that an optical sensor of the displaying device can capture an object on a surface on which the apparatus rests.

11. The apparatus of any of the preceding claims, and further comprising:
a displaying device (12) with a screen (14) for displaying an object and an optical sensor for capturing an image of the object;
wherein the rigid housing (16) is arranged to receive the displaying device such that the screen (14) is at least partially covered by the housing when the displaying device is not in use.

12. The apparatus of claim 11, wherein the housing (16) is supported by a surface; and wherein the display support means supports the displaying device (12) such that the optical sensor is positioned for capturing an image located on the surface which supports the housing.

13. The apparatus of any of claims 11-12, wherein the housing (16) is arranged to receive the displaying device such that the screen (14) is fully covered by the housing when the displaying device is not in use.

14. A method of forming an apparatus for protecting and supporting an image displaying device (12) with a screen (14), said method comprising:
forming a rigid housing (16) able to receive the displaying device (12) and protect the screen (14) when not in use; and
forming display support means in the housing for supporting the displaying device in a use position.

15. The method of claim 14, wherein the step of forming display support means in the housing comprises forming a slot (28) in the housing able to receive at least a portion of the displaying device (12).
